# EUROPEAN PATENT APPLICATION

(11) **EP 3 992 849 A1**
(43) Date of publication of application: **04.05.2022**
(21) Application number: 20204029.1
(22) Date of filing: 27.10.2020
(51) Int. Cl.: G06K 9/62, G06N 3/02, G06N 5/02, G06N 5/04

(54) **CONDITION MONITORING SYSTEM**

(71) Applicant: Siemens Aktiengesellschaft, 80333 München (DE)
(72) Inventor: Pantano, Matteo, 81737 München (DE); Kamps, Tobias, 80538 München (DE); Hauser, Tobias, 89347 Bubesheim (DE); Wolff, Andreas, 81825 München (DE)

(57) **Abstract**

A condition monitoring system for one or more objects of a class of objects such as plants in a planted field uses a detector arrangement such as a robot or drone having one or more cameras or 3D scanners to feed data to a computer-based classification arrangement for identifying the objects, the classification arrangement using both a neural network trained for identification of the objects and a computer vision system using ontological data to identify the objects and stores information including a spatial position of the found object in a database. A later survey of the objects will use the spatial position and camera data to re-identify the objects, such as grown plants, using a computer-based reclassification arrangement that operates in a manner similar to the computer-based classification arrangement.

## Description

The present invention relates to a condition monitoring system for one or more objects of a class of objects.

Condition monitoring systems are useful in many applications, such as power electronics, plant monitoring and train and track monitoring in railway applications. In modern applications the meaning of condition monitoring is often expanded to a digital twin system. The digital twin system pairs each real-world object with its own digital representation. This digital representation may include pre-existing modelling data such as CAD models or physical or mathematical models of the structure and function of the object. It may also include measured and simulated features of the object, some of which may be constant and some of which may be variable. Examples for variable features are a junction temperature on a power electronics circuit, small deviations in the form of a train track or changes in the overall growth structure in a planted field.

Robotization and automation of a planted field, such as in a vineyard, allows increasing productivity by reaching by a higher degree of digitalization. As a disadvantage, it leads to a loss of direct supervision of the planted field by the agricultural operator who will not be visiting the planted field with the same frequency as in a less digitalized environment. This loss of direct supervision will result in a loss of precision in farming, meaning that plants are treated less on the base of individual needs and more on the results of the digital twin representing the planted field.

The objective of the present invention is to provide a condition monitoring system that avoids or reduces the mentioned disadvantage.

A condition monitoring system for one or more objects of a class of objects in accordance with the invention comprises a detector arrangement having one or more survey components, the survey components being arranged to create survey data which comprises survey data on the objects.

It further comprises a computer-based classification arrangement for identifying the objects in the survey data. The classification arrangement in turn comprises a first and second classification component, the first classification component comprising a neural network trained for identification of the objects and the second classification component arranged to identify the objects based on ontological data. The classification arrangement is further arranged to identify the objects based on a combination of the results of the first and second classification component.

The condition monitoring system further comprises a positioning system arranged to assign a position information to an object identified by the classification arrangement and a database for storing data on identified objects, the data on identified objects comprising at least said position information.

A method in accordance with the invention for condition monitoring for one or more objects of a class of objects comprises creating survey data which comprises survey data on the objects, conducting a computer-based identification of the objects in the survey data, using a first and second classification component, the first classification component comprising a neural network trained for identification of the objects and the second classification component arranged to identify the objects based on ontological data, wherein identifying the objects comprises combining the results of the first and second classification component. It further comprises assigning a position information to an identified object, and storing data on identified objects, the data on identified objects comprising the position information, in a database.

The condition monitoring system and the method advantageously allow an identification of the objects at the level of individual objects instead of objects groups. If the objects are e.g. plants, individual plants are identified rather than plant groups. This makes it possible to implement a digital twin of the monitored assembly of objects that is based on the individual object rather than groups of objects.

With the increased resolution of the digital twin comes better knowledge about the status of the individual object as the status of objects is not averaged over a group of objects. This knowledge can be used to implement measures on individual objects in a manner that is tailored to the individual object and its specific requirements. In the example of plants the digital twin of the individual plant allows taking the best measures for the individual plant rather than taking measures based on e.g. the average health of a group of plants where the individual plant health may vary widely.

Further features that may be added alone or together in exemplary embodiments of the invention include:
The condition monitoring system may comprise a computer-based re-classification arrangement for identifying the objects from the survey data, the re-classification arrangement having a first and second classification component, the first classification component comprising a neural network trained for identification of the objects and the second classification component arranged to identify the objects based on ontological object data, wherein the re-classification arrangement is further arranged to identify the objects based on a combination of the results of the first and second classification component and the data on the objects that is stored in the database.

The re-classification arrangement works in a similar fashion to the classification arrangement but uses the data stored in the database, e.g. the position of an individual object to re-identify objects.

Advantageously the condition monitoring system is arranged to use either the classification arrangement or the re-classification arrangement in a single identification procedure. Specifically the classification arrangement may be used in a procedure where there is no data on the objects present in the database. The re-classification arrangement may be used instead if there is data on the objects present in the database.

The objects may be arranged in spatial proximity. In other words, the condition monitoring system may be used in conjunction with a group or assembly of objects such as a plantation or vineyard where a number of such objects, potentially a large number such as more than 20 or more than 100 objects are grouped closely together. In such assemblies of objects it is advantageous to be able to identify individual objects automatically even if objects undergo changes such as the growth of plants.

The objects may preferentially be subject to substantial change of their status including their outer form or structure. At the same time it is preferred when the objects are substantially unmoving. Such objects for which the invention is most suitable are plants in a controlled plantation, train systems and rolling stock, plants such as trees in the vicinity of traffic systems such as roads and railroad tracks but also individual units and parts of factory settings.

The positioning system may comprise a nonlocal positioning system such as GPS. More precisely the positioning system may comprise a receiver arranged to receive a position information for its own current position from the nonlocal positioning system which is employed. Using such a positioning system is advantageous when the objects are situated in an outdoor environment as the nonlocal positioning system is generally available in such environments with the only expense and apparatus necessary being said receiver.

Instead of a nonlocal positioning system or in addition to it, the condition monitoring system may employ a local positioning system. Such a local positioning system can take many forms. It may determine position based on electromagnetic signals and triangulation. Alternatively it may determine position by integrating, i.e. adding up, movements by the detector arrangement. These movements may be detected by one or multiple sensors and the determined position may be improved by using a sensor fusion approach. In a further alternative, it may employ visual markers that are pre-applied in the environment of the objects. In another alternative, a prerecorded map of the objects in their environment is used.

Based on how the position information is obtained it may be a spatial position information containing two or three dimensional coordinate data. The coordinate data may be relative to a fixed position, e.g. one specified position in the area of the assembly of objects. The coordinate data may also be absolute in the sense of being relative to the planet. The position information may also be a reference-based position information wherein the position information is a reference to a pre-existing reference item such as a visual marker or a map point.

The detector arrangement may comprise a mobile robot unit, an aerial drone or another vehicle able to determine its position. These may drive through a multitude of positions to generate a set of survey data which may then be investigate by the classification arrangement and the re-classification arrangement.

It is also possible that the detector arrangement is arranged at a fixed position when this position allows gathering data on all relevant objects. For example the detector arrangement may comprise one or more cameras that are arranged to be able to create an image of all objects without moving. The cameras may also be mounted to allow a swiveling motion thereby increasing the field of view of the camera without changing its position.

The detector arrangement may comprise a line camera as a survey component. A line camera is a camera that only detects a single line of pixels, or in other words an image that is one pixel wide or one pixel high. This type of camera is typically employed when either the camera moves or the objects move past the camera so that the image lines gathered over time may be assembled to form a two-dimensional image of the object. This type of camera is most useful when the movement of camera or object is mostly linear and has little or no acceleration. Thus, if the detector arrangement is a mobile robot unit, a line camera may be employed advantageously.

The detector arrangement may comprise a video camera as a survey component. This type of camera generates individual two-dimensional images or a stream of video data which can also be used when the camera or objects move in a non-linear fashion or with acceleration. Thus, a video camera is advantageously used in conjunction with an aerial drone.

The detector arrangement may comprise a 3D scanner system as a survey component. 3D scanners generate a depth map of the scanned area and are thus useful to determine the spatial structure of the scanned area. They may thus be used instead of a visual camera system or together with a visual camera system to complement the visual information with depth information.

The survey components do not necessarily comprise components that produce human-readable data such as images. It is possible for the survey components to operate purely on data that is difficult to visualize such as pure depth data as the neural network can be trained on such data and the ontology system can likewise use ontology data based on such information.

On the other hand, the survey components may use human-readable data as such data is more easily accessible to human validation of the results of the classification.

The ontological data may comprise data on the objects. In the example of plants it may comprise data on growth patterns, structure, leaf forms among others. The ontological data thus allows the identification of the objects themselves using a convention, i.e. non-neural network, system which gathers data on the objects from the survey systems and compares the data with the ontological data.

The ontological data may also comprise data on auxiliary items. The auxiliary items are of another class than the objects that are to be monitored. The auxiliary items are e.g. support items such as poles. Advantageously these auxiliary items are less prone to change than the objects that are to be monitored and may thus be more readily identified by the classification system. Also the auxiliary items may be marked or otherwise adapted to be more easily identified by an ontological computer vision system. Also, the auxiliary items may be given individual markings so that they can be used as reference items for a reference position information.

Embodiments of the present invention are now described with reference to the accompanying drawings to which the invention is not limited. The illustrations of the drawings are in schematic form. It is noted that in different figures, similar or identical elements use the same reference signs.
Fig. 1 illustrates the structure of a condition monitoring system;
Fig. 2 illustrates a vineyard with a mobile robot platform having a camera survey component of the condition monitoring system;
Fig. 3 illustrates the method of condition monitoring the plants in the vineyard upon a first identification step;
Fig. 4 illustrates the method of condition monitoring the plants in the vineyard upon a subsequent identification step;
Fig. 5 illustrates a the classification algorithm.

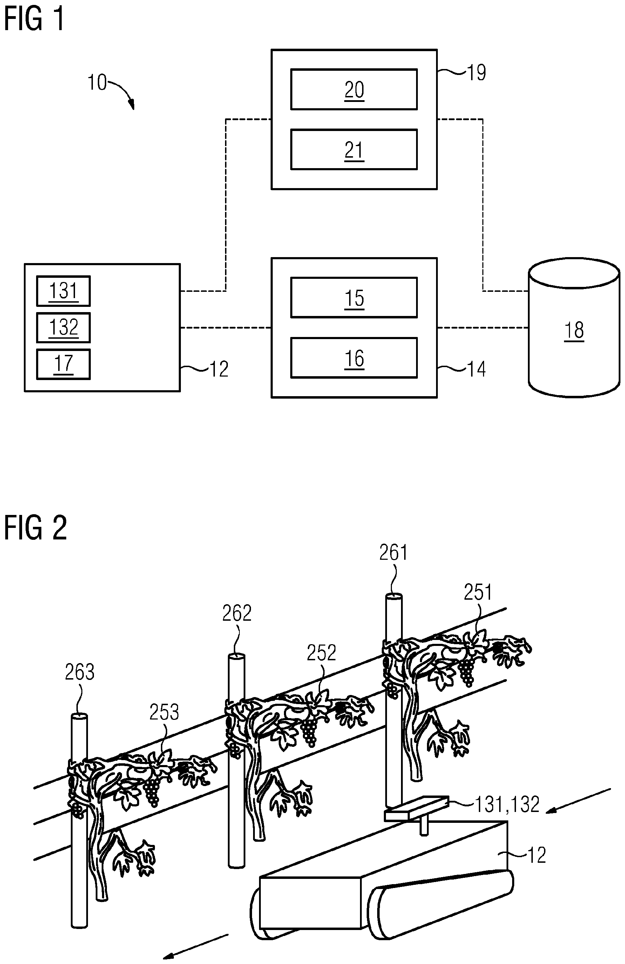

Fig. 1 illustrates in a schematic form the structure of a plant condition monitoring system 10 according to an embodiment of the invention. This particular embodiment of the invention is arranged to monitor the condition, including growth, of grape-bearing vines in a vineyard.

The plant condition monitoring system 10 comprises a mobile robot unit 12. The mobile robot unit 12 is a wheel-driven remote-controlled carrier. In use, the mobile robot unit 12 drives alongside one or more rows of vines and so bypasses each of the vines closely. The mobile robot unit 12 carries a survey component comprising a conventional digital video camera 131 and a light-based 3D scanning device 132. While driving in the vineyard the video camera 13 captures individual images or continuous video data. At the same time the 3D scanning device 132 captures depth information. The captured data may be transmitted by wire, wirelessly or may be stored with the mobile robot unit 12, for example on a solid-state data storage to be retrieved later.

In other embodiments of the invention, the mobile robot unit 12 or another carrier such as a drone system could carry a stereoscopic camera system. This would allow collecting RGB images of the objects, in this case vines, while at the same time providing depth information.

The plant condition monitoring system 10 further comprises a computer-based classification system 14. The classification system 14 comprises two main components. A first main component is a neural network 15. The neural network 15 is trained with data from the objects to be identified, i.e. in this embodiment with data from vines of a vineyard. To enable plant identification, the training data used is of a similar or equal nature to the survey data gathered during operation, i.e. the images or video data of the digital video camera 131 and the depth information of the 3D scanning device 132. The neural network 15 is arranged to identify and report data where a vine was found.

A second main component is a conventional, i.e. non-neural network, computer vision system 16 that identifies the vines based on ontological plant data, i.e. based on representative features which are expected to become apparent in the images or video data of the digital video camera 131 and the depth information of 3D scanning device 132.

The plant condition monitoring system 10 further comprises a positioning system in the form of a GPS receiver 17 which is situated in the mobile robot unit 12. The GPS receiver is used to determine the spatial position of the mobile robot unit 12. In this embodiment of the invention, the positions are then stored together with a time stamp to enable mapping data of the camera 131 and 3D scanning device 132 to spatial positions. Using a GPS receiver 17 is practical when in an outdoor environment such as the vineyard where the GPS signal can be readily used to determine position. Other global positioning services than GPS may be used in its stead.

The plant condition monitoring system 10 also comprises a database 18. This database is used to store data on vines that have been identified. This data includes the spatial position which is obtained through GPS receiver 17 and may include further information about the vines such as height or other data obtainable from the data of the camera and 3D scanning device 131, 132.

The plant condition monitoring system 10 further comprises a computer-based re-classification system 19. The re-classification system 19 is built in a similar manner as classification system 14. In this embodiment it is completely separate from classification system 14 but in other embodiments it may re-use some components of classification system 14. It comprises two main components. A first main component is a neural network 20. The neural network 20 is trained and used like neural network 15. A second main component is a conventional, i.e. non-neural network, computer vision system 21 that identifies the vines based on ontological plant data as well as the data stored in the database, including the spatial position of the vines.

Figure 2 shows the mobile robot unit 12 as it moves in the vineyard alongside an aisle of three vine plants 251...253, thus capturing images and depth information along its movement path. From figure 2 it becomes clear that the data obtained by the camera 131 and 3D scanning device 132 contains information on the vines 251...253 from different angles and more than one vine 251...253 may be present in any single image captured by the camera 131. Also, since the vines may grow in patterns that are not accurately predictable they may partly overlap. Thus it is necessary to identify individual vines in the obtained data.

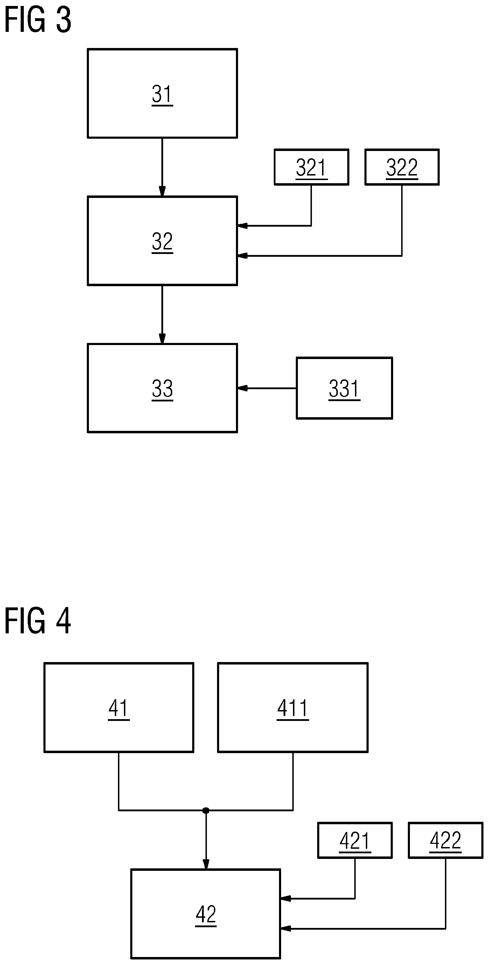

Figure 3 shows a schematic process by which an identification of vines 251...253 is conducted in a first run, i.e. when the plants are surveyed for the first time in their life cycle.

In a first step 31, the mobile robot unit 12 moves along the aisles that are formed in the vineyard alongside all vines 251...253 and captures images and depth information using the camera 131 and 3D scanning device 132 as shown in figure 2. It also captures positional data from the GPS receiver 17 and stores this data in a format that will later allow mapping images of the camera 131 or specific depth information from the 2D scanning device 132 to specific positions of the mobile robot unit 12.

In a second step 32, the gathered data is forwarded to the classification system 14 for processing. The second step 32 does not need to wait for completion of the first step 31. Gathered data can already be processed while the mobile robot unit 12 is still moving provided the gathered data can be forwarded to the classification system 14. In the classification system 14 the gathered data is analyzed to identify individual vines 251...253. To enable this identification the neural network 15 must have been trained using training data 321 and the computer vision system 16 must have ontological data 322 both of which preferentially happen before this first run is conducted.

For each vine 251...253 identified in the gathered data in the second step 32, data is stored in the database 18 in a third step 33. This data comprises position information 331 which is gathered from the data of GPS receiver 17.

In the present embodiment of the invention the ontological data 322 is based on the vines 251...253 themselves. In other embodiments the poles 261...263 that hold the vines may be used to enhance plant identification by adding ontological data 322 for the poles 261...263 as these will typically undergo fewer changes in the course of plant life. In the same way training data 321 for the neural network 15 can be adapted to contain the poles 261...263 to enable the neural network 15 to consider the poles 261...263 as part of the vines 251...253 that are to be identified.

A further alternative embodiment may use the poles to provide position information. To facilitate this the poles 261...263 could be marked with a unique identification symbol for each pole 261...263. Upon identification of such a marker from the gathered data the position information could be stored as a reference to that marker. In this way gathering absolute position information from a service such as GPS would be unnecessary and there would not even be any need to know the absolute position of the identified pole 261...263.

Figure 4 shows a schematic process by which a re-identification of vines 251...253 is conducted in a subsequent run, i.e. when the plants are surveyed again after a first run has already been conducted.

In a first step 41, the mobile robot unit 12 moves along the aisles that are formed in the vineyard alongside all vines 251...253 and captures images and depth information using the camera 131 and 3D scanning device 132 as shown in figure 2. It also captures positional data from the GPS receiver 17 and stores this data in a format that will later allow mapping images of the camera 131 or specific depth information from the 2D scanning device 132 to specific positions of the mobile robot unit 12. First step 41 thus corresponds to first step 31 and is essentially equal.

In a second step 42, the gathered data is forwarded to the re-classification system 19 for processing. In addition, the data 411 stored in the database 18 is forwarded to the re-classification system 19. Again, the second step 42 does not need to wait for completion of the first step 41. Gathered data can already be processed while the mobile robot unit 12 is still moving provided the gathered data can be forwarded to the re-classification system 19. In the re-classification system 19 the gathered data is analyzed together with the data 411 from the database 18 to re-identify individual vines 251...253. To enable this identification the neural network 20 must have been trained using training data 321 and the computer vision system 21 must have ontological data 422 both of which preferentially happen before this subsequent run is conducted.

While there will be a large overlap of the operation between the re-classification system 19 and the classification system 14 the re-classification system 19 also takes into account previously gathered data and may thus not be exactly equal to classification system 14. The re-classification system 19 and the classification system 14 may thus be separate systems.

With the conclusion of the second step 42 the vines 251...253 have been re-identified, i.e. their current form is mapped to the vines 251...253 that had been identified in previous identification runs. With this result, the current status of the vines and change in the vines can be detected and the digital twin of the individual vine can be updated.

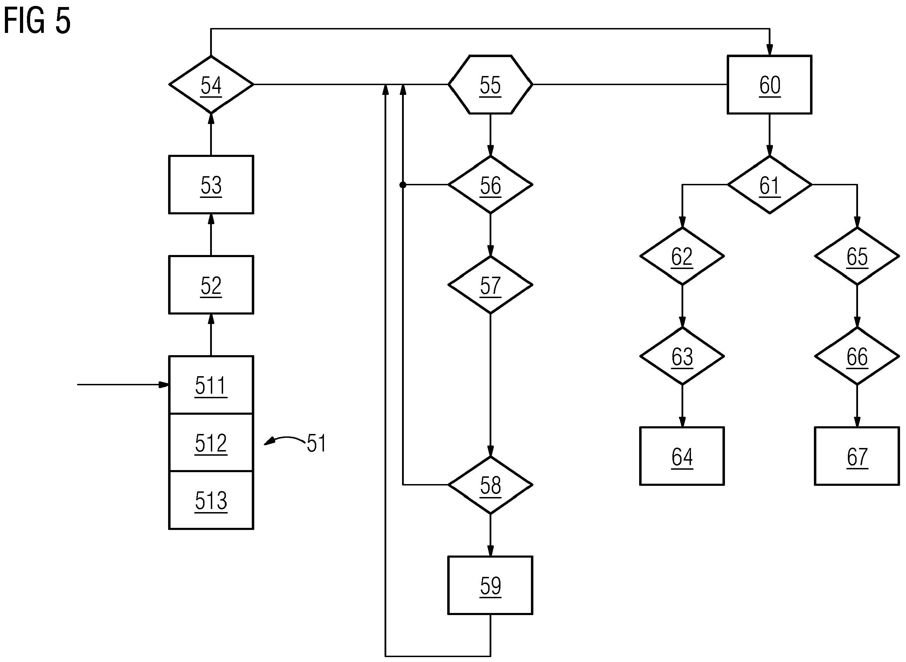

A more detailed look at step 32 is given in figure 5 which shows individual substeps taken during a classification of vines. The algorithm outlined in figure 5 starts by receiving image data 511 from the video camera 131, depth data 512 from the 3D scanner device 132 as well as positional data 513 in a first substep. While many images may be received at this point, the algorithm will process each image separately.

In further substeps the image data 51 undergoes further processing. Specifically it is first converted to a format that allows easy processing in a second substep 52. Further adjustments may include adjusting the image resolution and file format. Also, the image is converted to grayscale and a Gaussian blur is applied. Then, canny edge filtering is conducted.

In a third substep 53 a Hough transformation is applied to the images to find Hough lines. In a fourth substep 54 a test is made if any Hough lines have been found. If that is not the case, the algorithm proceeds to a substep 60 described below and avoids the substeps 55...59.

In case Hough lines are found the algorithm continues on to a fifth substep 55 which is a loop substep that will cycle through every Hough line found in the currently processed image and process this line according to the sixth to ninth substep 56...59.

In the sixth substep 56, the Hough line's angle with respect to a horizontal direction is calculated and compared to a preset angle lambda. If the angle does not exceed lambda, i.e. is too close to horizontal, the Hough line is not deemed a candidate for being a pole and is discarded. If the angle exceeds lambda, processing continues with the seventh substep 57.

In the seventh substep 57 the line distance between the current Hough line and a previous Hough line - if there is one - in a local coordinate system is calculated as well as the distance from the camera which is taken from the depth data 512. The distance from the camera is compared to a maximum distance value epsilon. The line distance is compared to a minimum line distance tau. If the distance from the camera exceeds epsilon - meaning the Hough line is too far away - or the line distance is smaller than tau - meaning the Hough line is too close to a previous line, the Hough line is not deemed a candidate for being a pole 261...263 and is discarded. Otherwise processing continues with the eighth substep 58.

In the eighth substep 58 the global coordinates of the Hough line is calculated and from this, a global coordinate distance to the previously found pole 261...263 is calculated. This pole distance is compared to a minimum and maximum value omega1 and omega2. If it falls outside the range given by these values, it is not deemed a candidate for being a pole 261...263 and is discarded. Otherwise, this Hough line is a candidate for being a vine pole 261...263 and is appended to a list of candidates in a ninth substep 59.

In the tenth substep 60 the neural network 15, 20 conducts a recognition step in which it tries to identify the vines 251...253 in the selected images. In an eleventh substep 61 further processing branches out depending on whether the neural network was able to find and identify a vine 251..253 from the given image. If this is the case, processing continues with the twelfth through fourteenth substep 62...64. If it has not, processing continues with the fifteenth through seventeenth substep 65...67.

In a twelfth substep 62 processing continues with a region of interest in the image found by the neural network 15, 20. The center point of this region of interest is converted to a global coordinate system to obtain its absolute position. A predicted distance is then calculated as the distance in global coordinates between the center of the region of interest and the absolute position of a previously identified pole 261...263. If this distance is between a maximum and minimum threshold value, processing continues with the thirteenth substep 63. In this substep the region of interest is compared to the established list of images of previously identified vines. If the presently identified vine is not already present in that list the current image is appended to the list in the fourteenth substep 64.

If, in the eleventh substep 61, the neural network 15, 20 was unable to make an identification, an ontological approach is conducted instead. In the fifteenth substep 65 again a predicted distance is calculated but in this case as the distance in global coordinates between the center of the image in global coordinates and the absolute position of a previously identified pole 261...263. If this distance is between a maximum and minimum threshold value, processing continues with the sixteenth substep 66. In this substep the region of interest identified through ontological data and computer vision is compared to the established list of images of previously identified vines. If the presently identified vine is not already present in that list the current image is appended to the list in the seventeenth substep 67.

### Reference signs

- 10: plant condition monitoring system
- 12: mobile robot unit
- 131: video camera
- 132: 3D scanning device
- 14: classification system
- 15, 20: neural network
- 16, 21: computer vision system
- 17: GPS receiver
- 19: re-classification system
- 251...253: vine plants
- 31...33: steps
- 321: training data
- 322, 422: ontological data
- 331: position information
- 261...263: poles
- 41...43: steps
- 411: data from database
- 51...67: substeps

## Claims

1. A condition monitoring system (10) for one or more objects (251...253) of a class of objects, comprising:
- a detector arrangement (12) having one or more survey components (131, 132), the survey components (131, 132) being arranged to create survey data which comprises survey data on the objects (251...253),
- a computer-based classification arrangement (14) for identifying the objects (251...253) in the survey data, the classification arrangement (14) having a first and second classification component (15, 16), the first classification component (15) comprising a neural network (15) trained for identification of the objects (251...253) and the second classification component (16) arranged to identify the objects (251...253) based on ontological data (322), wherein the classification arrangement (14) is further arranged to identify the objects (251...253) based on a combination of the results of the first and second classification component (15, 16),
- a positioning system (17) arranged to assign a position information (331) to an object (251...253) identified by the classification arrangement (14),
- a database for storing data on identified objects (251...253), the data on identified objects (251...253) comprising the position information (311).

2. The condition monitoring system (10) of claim 1 comprising a computer-based re-classification arrangement for identifying the objects (251...253) from the survey data, the re-classification arrangement having a first and second classification component, the first classification component comprising a neural network trained for identification of the objects (251...253) and the second classification component arranged to identify the objects (251...253) based on ontological object data, wherein the classification arrangement is further arranged to identify the objects (251...253) based on a combination of the results of the first and second classification component and the data on the objects (251...253) that is stored in the database.

3. The condition monitoring system (10) of claim 1 wherein the objects (251...253) are arranged in spatial proximity.

4. The condition monitoring system (10) of claim 1 wherein the positioning system (17) comprises a global positioning system such as GPS.

5. The condition monitoring system (10) of claim 1 wherein the positioning system (17) comprises a local positioning system.

6. The condition monitoring system (10) of claim 1 wherein the detector arrangement comprises a mobile robot unit (12).

7. The condition monitoring system (10) of claim 1 wherein the detector arrangement comprises an aerial drone.

8. The condition monitoring system (10) of claim 1 wherein the detector arrangement comprises a vehicle with a positioning system (17).

9. The condition monitoring system (10) of claim 1 wherein the detector arrangement comprises a line camera as a survey component.

10. The condition monitoring system (10) of claim 1 wherein the detector arrangement comprises a video camera (131) as a survey component.

11. The condition monitoring system (10) of claim 1 wherein the detector arrangement comprises a 3D scanner system (132) as a survey component.

12. The condition monitoring system (10) of claim 1 wherein the ontological data comprises data on the objects (251...253).

13. The condition monitoring system (10) of claim 1 wherein the ontological data comprises data on auxiliary objects (261...263) of another class of objects.

14. The condition monitoring system (10) of claim 1 wherein the objects are plants (251...253) .

15. Method for condition monitoring for one or more objects (251...253) of a class of objects, comprising:
- creating survey data which comprises survey data on the objects (251...253),
- conducting a computer-based identification of the objects (251...253) in the survey data, using a first and second classification component (15, 16), the first classification component (15) comprising a neural network (15) trained for identification of the objects (251...253) and the second classification component (16) arranged to identify the objects (251...253) based on ontological data (322), wherein identifying the objects (251...253) comprises combining the results of the first and second classification component (15, 16),
- assigning a position information (331) to an identified object (251...253),
- storing data on identified objects (251...253), the data on identified objects (251...253) comprising the position information (311), in a database.
